# EUROPEAN PATENT SPECIFICATION

(11) **EP 3 228 928 B1**
(45) Date of publication and mention of the grant of the patent: **17.06.2020**
(21) Application number: 17164214.3
(22) Date of filing: 31.03.2017
(51) Int. Cl.: F21S 43/40, F21S 43/14, F21S 43/31

(54) **AUTOMOTIVE LIGHTING UNIT**
BELEUCHTUNGSEINHEIT FÜR KRAFTFAHRZEUGE
UNITÉ D'ÉCLAIRAGE D'AUTOMOBILE

(30) Priority: 31.03.2016 IT UA20162153
(43) Date of publication of application: 11.10.2017
(73) Proprietor: MARELLI AUTOMOTIVE LIGHTING ITALY S.P.A., 10078 Venaria Reale (TO) (IT)
(72) Inventor: HERLIN, Pascal, 10078 Venaria Reale (IT); OSADNIK, Adam, 41-200 Sosnowiec (PL)
(74) Representative: Bellemo, Matteo

(56) References cited:
- EP-A2- 1 434 000
- EP-A2- 2 071 228
- WO-A1-2012/052946
- KR-A- 20130 039 576
- US-A1- 2009 027 911

## Description

The present invention relates to an automotive lighting unit.

More in detail, the present invention relates to a rear lighting unit for cars, use to which the following description will make explicit reference without this implying any loss in generality.

As is known, rear lighting units for motor vehicles usually comprise: a substantially basin-like shape, rear casing which is structured so as be stably recessed into a specially provided seat made in the rear part of the vehicle body; a front semi-shell which is placed to close the mouth of the casing so as to surface from the vehicle body and is provided with a series of transparent or semi-transparent portions, usually of different colours from each other; and a series of lighting assemblies, which are arranged inside the casing, each one immediately beneath a respective transparent or semi-transparent portion of the front semi-shell, so as to be able to backlight that transparent or semi-transparent portion of the semi-shell.

In general, each lighting assembly is uniquely associated with a specific light signal, and is therefore structured so as be able to emit a light beam that, after emission from the light through the front semi-shell, meets the type-approval specifications foreseen for that light signal.

In recent years, some car manufacturers have decided to equip new car models with rear lighting units able to produce, on the front semi-shell, special luminous patterns and/or light effects that uniquely refer to the same car manufacturers. Thanks to these new rear lighting units, these cars are immediately distinguishable from other vehicles in circulation, even in conditions of poor lighting or total darkness.

These rear lighting units are disclosed, for example, in EP2071288 A2, WO2012/052946 A1 and EP1434000 A2.

Aim of the present invention is to provide a rear lighting unit for cars that is able to produce luminous patterns and/or light effects that are new and different with respect to those provided by the rear lighting units currently on the market.

In compliance with the above aims, according to the present invention there is provided an automotive lighting unit as specified in claim 1 and preferably, though not necessarily, in any of its dependent claims.

La present invention will now be described with reference to the accompanying drawings, which illustrate a non-limitative embodiment, in which:
- Figure 1 is a perspective view of a rear lighting unit for cars realized according to the teachings of the present invention, with parts in section and parts removed for clarity;
- Figure 2 is a partially exploded, perspective view of the automotive lighting unit shown in Figure 1, with parts removed for clarity;
- Figure 3 is a perspective view of the main lighting assembly of the automotive lighting unit shown in Figure 2;
- Figure 4 is an exploded perspective view of the main lighting assembly shown in Figure 3;
- Figure 5 is a front view of the main lighting assembly shown in Figures 3 and 4; whereas
- Figure 6 is a side view of the lighting assembly shown in Figure 5, cut along section line V-V.

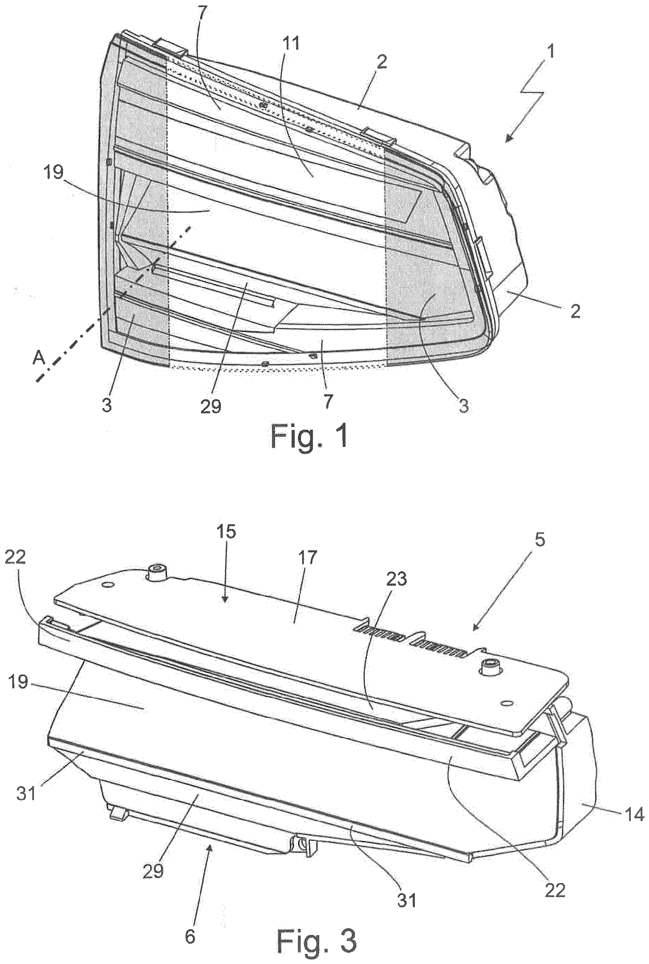

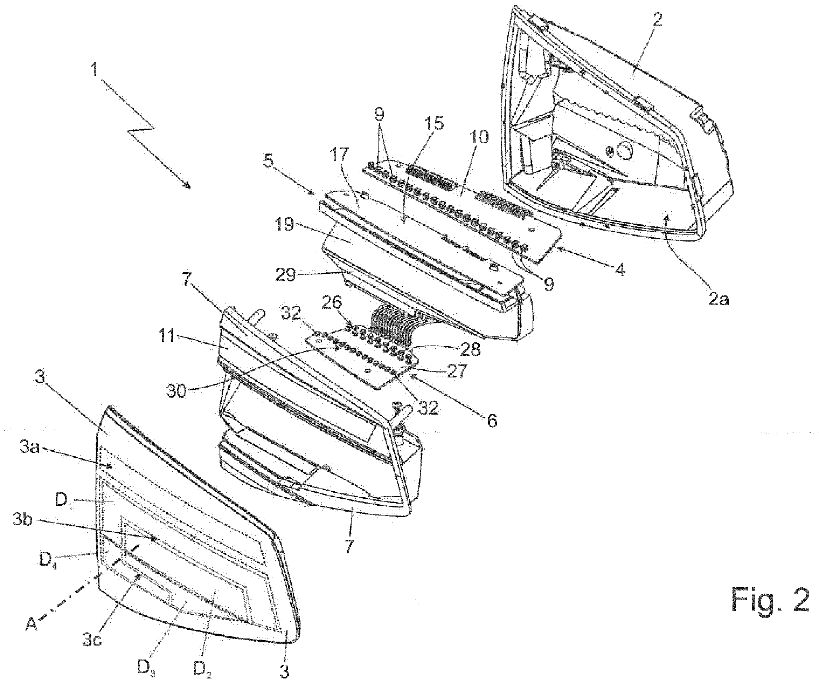

With reference to Figures 1 and 2, reference numeral 1 indicates, as a whole, an automotive lighting unit particularly suited for being fixed on the rear part of the vehicle body of a car, van, truck, motorcycle or similar, i.e. a rear automotive lighting unit.

More in detail, automotive lighting unit 1 is preferably, though not necessarily, structured so as to be stably recessed into the rear part of the vehicle body of a car or similar motor vehicle, and firstly comprises: a rigid rear casing 2, preferably made of plastic material, which is substantially basin-shaped and preferably structured so as be at least partially recessed inside a seat specially provided in the rear part of the vehicle body (not shown); and a rigid front semi-shell 3, preferably made of plastic material, which is arranged to close the mouth 2a of the rear casing 2, preferably so as simultaneously surface on the outside of the vehicle body, and is provided with one or more transparent or semi-transparent portions, which may optionally be coloured.

In the example shown, in particular, the rear casing 2 is preferably made of an opaque plastic material, preferably via an injection moulding process. Instead, the front semi-shell 3 is preferably made of a transparent or semi-transparent plastic material, such as transparent or semi-transparent polycarbonate or polymethyl methacrylate for example, also in this case preferably via an injection moulding process.

Obviously, in a different embodiment, the rear casing 2 could also be structured so as to be simply fixed on the rear part of the vehicle body (not shown).

With reference to Figures 1 and 2, moreover the automotive lighting unit 1 also comprises one or more electrically-powered lighting assemblies, each of which emits light on command and is located inside the rear casing 2 in a position such as to backlight a corresponding transparent or semi-transparent portion of the front semi-shell 3 separately and independently of the other lighting assemblies.

More in detail, the automotive lighting unit 1 is provided with a main optical axis A which is parallel to the longitudinal axis of the vehicle when the automotive lighting unit 1 is correctly positioned on the vehicle body, and each lighting assembly is adapted to project the light out of the automotive light with a prevalent component parallel to the main optical axis A.

In the example shown, in particular, the front semi-shell 3 is preferably provided with three distinct transparent or semi-transparent portions 3a, 3b and 3c, preferably spaced out vertically with respect to each other; and the automotive lighting unit 1 is preferably provided with three distinct lighting assemblies 4, 5 and 6, each of which is located inside the rear casing 2, directly facing a respective transparent or semi-transparent portion 3a, 3b, 3c, and is structured so as to direct the generated light exclusively towards the facing transparent or semi-transparent portion 3a, 3b, 3c.

With reference to Figures 1 and 2, preferably the automotive lighting unit 1 moreover comprises a covering mask 7 made of opaque material, which is located roughly at the mouth 2a of the casing 2, between the front semi-shell 3 and the single lighting assemblies 4, 5 and 6, and is structured so as cover/hide certain parts of the lighting assemblies 4, 5 and 6 from view.

In the example shown, in particular, the covering mask 7 is preferably made of an opaque plastic material, preferably via an injection moulding process, and is also preferably structured so as to directly support the single lighting assemblies 4, 5 and 6.

With reference to Figure 2, lighting assembly 4 preferably comprises a row of LED diodes 9 (acronym for Light Emitting Diode), which are arranged spaced out side by side to one another, preferably on a single support board 10 that incorporates the power supply and control circuit of the diodes, and is located inside the rear casing 2 preferably in a substantially horizontal position, in such a way that the LED diodes 9 can direct the generated light towards the facing transparent or semi-transparent portion 3a of the front semi-shell 3, so as to backlight the transparent or semi-transparent portion 3a; and, optionally, also a plate-like screen diffuser 11 made of a transparent or semi-transparent material, which is interposed between the transparent or semi-transparent portion 3a of the front semi-shell 3 and the row of LED diodes 9 so that the light emitted by the LED diodes 9 can pass through it, and is structured so as to spread the light that passes through the screen diffuser 11 directed towards the transparent or semi-transparent portion 3, preferably in a substantially uniform manner over the entire area/extension of the transparent or semi-transparent portion 3a.

In the example shown, in particular, the screen diffuser 11 is preferably made of a semi-transparent plastic material, preferably via an injection moulding process, and is preferably made in a single piece with the covering mask 7.

With reference to Figures 2, 3, 4, 5 and 6, lighting assembly 5, instead, comprises: a reflector body 14 which is located inside the rear casing 2 spaced apart from and facing the transparent or semi-transparent portion 3b of the front semi-shell 3, and is provided with a reflecting surface 14r that directly faces the transparent or semi-transparent portion 3b and is shaped so as to reflect the incident light towards that transparent or semi-transparent portion 3b; and a first electrically-powered light source 15 which is located inside the rear casing 2, and is oriented so as to direct the generated light towards the reflecting surface 14r of the reflector body 14.

Preferably, the light source 15 is also located inside the rear casing 2, on a side of the path followed by the light reflected by the reflecting surface 14r and directed towards the transparent or semi-transparent portion 3b of the front semi-shell 3.

In other words, the light source 15 is preferably located inside the rear casing 2, on a side of the empty space delimited at the back by the reflecting surface 14r of the reflector body 14 and delimited at the front by the transparent or semi-transparent portion 3b of the front semi-shell 3.

Preferably, the reflecting surface 14r of the reflector body 14 is also provided with a complex three-dimensional profile, which is capable of reflecting the light coming from the light source 15 in a predetermined manner towards specific areas/zones of the transparent or semi-transparent portion 3b in such a way that the light generated by the light source 15, after it has been reflected by the reflector body 14, can form/trace a first luminous pattern of predetermined shape directly on the transparent or semi-transparent portion 3b.

In other words, the reflecting surface 14r of the reflector body 14 is structured so as to direct the light rays r₁ coming from the light source 15 in a differentiated and prearranged manner towards a specific first sector D₁ of the transparent or semi-transparent portion 3b having a predetermined shape, so as to be able to only and exclusively backlight sector D₁ of the transparent or semi-transparent portion 3b.

More in detail, the reflecting surface 14r of the reflector body 14 is preferably structured so as to reflect and direct the light rays r₁ coming from the light source 15 in a differentiated and prearranged manner towards sector D₁ of the transparent or semi-transparent portion 3b, so that the light rays r₁ are only emitted from the front semi-shell 3 through sector D₁ of the transparent or semi-transparent portion 3b.

Obviously, the shape of sector D₁ corresponds to the shape of the first luminous pattern made on the transparent or semi-transparent portion 3b.

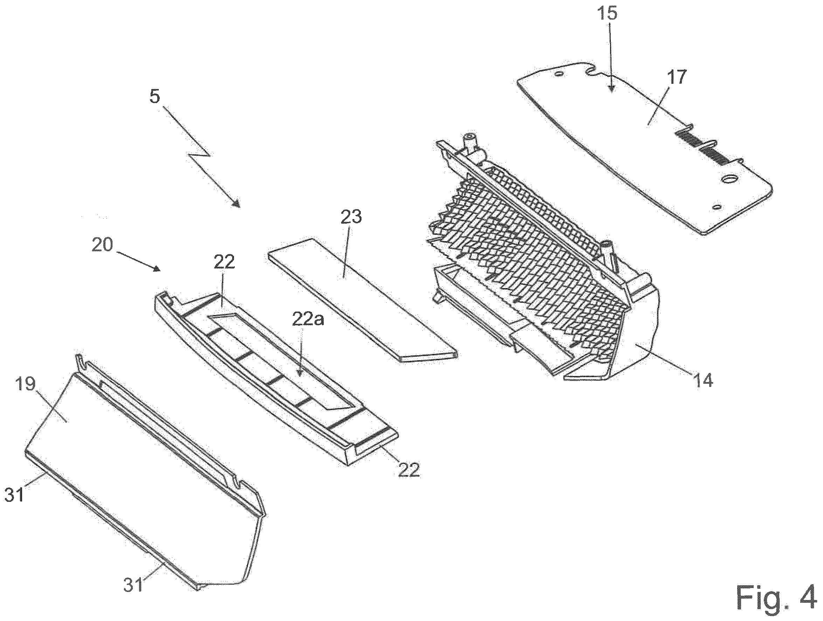

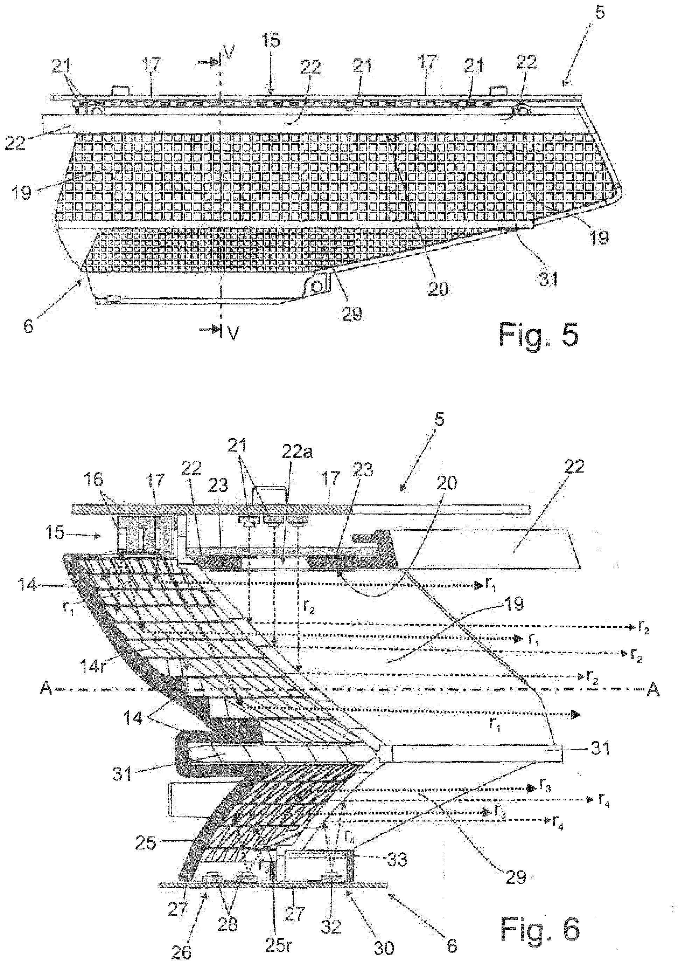

With particular reference to Figures 4 and 6, in the example shown, in particular, reflector body 14 preferably consists of a substantially basin-shaped semi-shell which is preferably made of an opaque plastic material, preferably via an injection moulding process, and is located inside the rear casing 2 with the concavity turned towards the transparent or semi-transparent portion 3b of the front semi-shell 3. Preferably, the bottom of the substantially basin-shaped semi-shell is also mirror metalized so as form the reflecting surface 14r.

In addition, the reflecting surface 14r of the reflector body 14 is preferably subdivided into a multitude of small elementary reflective sectors, wherein some of the reflective sectors are opportunely shaped and oriented so as to reflect and direct the light rays r₁ coming from the light source 15 and incident on such sectors directly towards a corresponding predetermined zone/area of the transparent or semi-transparent portion 3b of the front semi-shell 3. Other reflective sectors are instead opportunely shaped and/or oriented so as to reflect the light rays r₁ coming from the light source 15 and incident on such sectors directly towards a dead/opaque zone of the rear casing 2 and/or of the front semi-shell 3.

The set of elementary reflective sectors is moreover as a whole structured to reflect and direct the light rays r₁ coming from the light source 15 only towards sector D₁ of the transparent or semi-transparent portion 3b, so as to be able to backlight only sector D₁ of the transparent or semi-transparent portion 3b.

Obviously, in a different embodiment, the reflector body 14 might not have the series of reflective sectors designed to direct the light rays r₁ coming from the light source 15 towards the dead/opaque zone of the rear casing 2 and/or of the front semi-shell 3, and the reflecting surface 14r might have a shape substantially similar that of sector D₁ of the transparent or semi-transparent portion 3b, i.e. of the first luminous pattern.

With reference to Figures 2, 3, 4, 5 and 6, the light source 15, instead, preferably comprises: a support board 17 which is placed inside the rear casing 2, on a side of the path followed by the light rays r₁ reflected by the reflecting surface 14r and directed towards the transparent or semi-transparent portion 3b of the front semi-shell 3 (i.e. on a side of the empty space delimited at the back by the reflector body 14 and delimited at the front by the transparent or semi-transparent portion 3b of the front semi-shell 3); and a series of LED diodes 16 (acronym for Light Emitting Diode), which are arranged spaced out side by side to one another on a same face of the support board 17 in such a way that each LED diode 16 faces the reflecting surface 14r of the reflector body 14 and can so direct the generated light directly towards the reflecting surface 14r.

Preferably, the support board 17 also incorporates the power supply and control circuit for the LED diodes 16.

In the example shown, in particular, the support board 17 is preferably located inside the rear casing 2 in a substantially horizontal position and/or locally substantially perpendicular to the front semi-shell 3. Preferably, the support board 17 is also arranged above the reflector body 14 and beneath the support board 10 of lighting assembly 4, locally substantially parallel to support board 10.

With reference to Figures 2, 3, 4, 5 and 6, lighting assembly 5 additionally further comprises: an intermediate transparent plate 19 which is arranged in an oblique/ inclined position between the reflecting surface 14r of the reflector body 14 and the transparent or semi-transparent portion 3b of the front semi-shell 3, i.e. along the path followed by the light rays r₁ reflected by the reflecting surface 14r and directed towards the transparent or semi-transparent portion 3b, so that the light reflected by the reflector body 14 towards the transparent or semi-transparent portion 3b freely passes through it; and a second electrically-powered light source 20 which is located inside the rear casing 2, on a side of the path followed by the light rays r₁ reflected by the reflecting surface 14r and directed towards the transparent or semi-transparent portion 3b of the front semi-shell 3 (i.e. on a side of the empty space delimited at the back by the reflector body 14 and delimited at the front by the transparent or semi-transparent portion 3b of the front semi-shell 3), and is oriented so as to direct the generated light towards the front face of the intermediate transparent plate 19 in such a way that at least part of this light is reflected by the intermediate transparent plate 19 towards the transparent or semi-transparent portion 3b of the front semi-shell 3.

More in detail, the light source 20 is oriented s that at least part of the light rays r₂ coming from the light source 20 can reach the front face of the intermediate transparent plate 19 with an angle of incidence greater than the critical angle, and so be reflected towards the transparent or semi-transparent portion 3b of the front semi-shell 3.

Furthermore, light source 20 can also be activated independently of light source 15, and is preferably located inside the rear casing 2 beside light source 15.

In addition, the light source 20 is also preferably structured so as to create, on the front face of the intermediate transparent plate 19, its luminous pattern of predetermined shape which the intermediate transparent plate 19 reflects towards the front semi-shell 3, so as to form/trace, directly on the transparent or semi-transparent portion 3b of the front semi-shell 3, a second luminous pattern of predetermined shape and which has a different position and/or shape from that of the first luminous pattern.

Optionally, the second luminous pattern can also be at least partially superimposed on the first luminous pattern.

More in detail, the light source 20 is preferably structured so as to direct, towards the intermediate transparent plate 19, a beam of light rays r₂ that strike/reach a limited zone/area of predetermined shape of the front face of the intermediate transparent plate 19; while the intermediate transparent plate 19 is able to reflect the light rays r₂ towards the front semi-shell 3, so as to only and exclusively backlight a second sector D₂ of the transparent or semi-transparent portion 3b not coincident with sector D₁ of that transparent or semi-transparent portion 3b.

Obviously, the shape of sector D₂ corresponds to the shape of the second luminous pattern made on transparent or semi-transparent portion 3b. Sector D₂ of transparent or semi-transparent portion 3b also has a different shape from that of sector D₁ of the same transparent or semi-transparent portion 3b.

In other words, the light rays r₁ generated by light source 15 are reflected by the reflector body 14 towards the front semi-shell 3 so as to backlight a first sector, sector D₁ in this case, of the transparent or semi-transparent portion 3b; while the light rays r₂ generated by light source 20 are reflected by the intermediate transparent plate 19 towards the front semi-shell 3 so as to backlight a second sector, sector D₂ in this case, of the transparent or semi-transparent portion 3b not coincident with the first sector.

With reference to Figures 2, 3, 4, 5 and 6, in the example shown, in particular, the intermediate transparent plate 19 is preferably made of transparent polycarbonate or another similar plastic material, and is fastened on the reflector body 14 so as to be inclined at an angle preferably between 40° and 50° and, optionally, roughly equal to 45° with respect to the main optical axis A of the lighting unit.

Light source 20, instead, preferably comprises a series of LED diodes 21 (acronym for Light Emitting Diode), which are arranged side by side to one another, preferably on a portion of the support board 17, in such a way that each LED diode 21 faces the front face of the intermediate transparent plate 19 and can direct the generated light towards the front face of the intermediate transparent plate 19.

Preferably, the light source 20 additionally also comprises a plate-like screening mask 22, which is interposed between the LED diodes 21 and the front face of the intermediate transparent plate 19, and is provided with a large pass-through opening 22a of predetermined shape, through which part of the light emitted by the LED diodes 21 can reach the front face of the intermediate transparent plate 19; and optionally also a plate-like screen diffuser 23 which is made of transparent or semi-transparent material, is placed to close the pass-through opening 22a of the screening mask 22, and is structured so as to spread the light that passes through the screen diffuser 23 directed towards the pass-through opening 22a, preferably in a substantially uniform manner over the entire area/extension of the pass-through opening 22a.

With reference to Figures 4, 5 and 6, in the example shown, in particular, the screening mask 22 preferably consists of a plate-like cover which is preferably made of an opaque plastic material and is directly fastened on the support board 17, completely covering the portion of the board that accommodates the LED diodes 21.

Similarly to the covering mask 7, also plate-like cover 22 is preferably made via an injection moulding process.

The screen diffuser 23, instead, preferably consists of a plate which is made of a semi-transparent plastic material and is preferably stably constrained between the screening mask 22 and the support board 17.

With reference to Figures 2, 3, 4 and 6, in addition, the transparent or semi-transparent portion 3c of the front semi-shell 3 is preferably contiguous/adjacent to the transparent or semi-transparent portion 3b, and the corresponding lighting assembly 6 is preferably arranged beside the lighting assembly 5.

Preferably, lighting assembly 6 additionally comprises: a reflector body 25 which is located inside the rear casing 2 spaced apart from and facing the transparent or semi-transparent portion 3c of the front semi-shell 3, and is provided with a reflecting surface 25r that directly faces the transparent or semi-transparent portion 3c and is shaped so as to reflect the incident light towards that transparent or semi-transparent portion 3c; and an electrically-powered light source 26 which is located inside the rear casing 2, and is oriented so as to direct the light emitted towards the reflecting surface 25r of the reflector body 25, so as to be able to backlight the transparent or semi-transparent portion 3c.

Preferably, the light source 26 is moreover arranged inside the rear casing 2 on a side of the optical path between the reflector body 25 and the transparent or semi-transparent portion 3c of the front semi-shell 3. In other words, the light source 26 is preferably located inside the rear casing 2, on a side of the empty space delimited at the back by the reflecting surface 25r of reflector body 25 and delimited at the front by the transparent or semi-transparent portion 3c of front semi-shell 3.

Preferably, the reflecting surface 25r of reflector body 25 is additionally provided with a complex three-dimensional profile, which is capable of reflecting the light coming from light source 26 in a predetermined manner towards specific areas/zones of the transparent or semi-transparent portion 3c in such a way that the light generated by the light source 26, after it has been reflected by the reflector body 25, can form/trace a first luminous pattern of predetermined shape directly on the transparent or semi-transparent portion 3c.

In other words, the reflecting surface 25r of the reflector body 25 is structured so as to direct the light rays r₃ coming from the light source 26 in a differentiated and prearranged manner towards a specific first sector D₃ of the transparent or semi-transparent portion 3c having a predetermined shape, so as to be able to only and exclusively backlight sector D₃ of transparent or semi-transparent portion 3c.

More in detail, the reflecting surface 25r of reflector body 25 is preferably structured so as to reflect and direct the light rays r₃ coming from the light source 26 in a differentiated and prearranged manner towards sector D₃ of the transparent or semi-transparent portion 3c, so that the light rays r₃ are only emitted from the front semi-shell 3 through sector D₃ of the transparent or semi-transparent portion 3c.

Obviously, the shape of sector D₃ corresponds to the shape of the first luminous pattern realized on transparent or semi-transparent portion 3c.

With particular reference to Figures 4 and 6, in the example shown, in particular, reflector body 25 preferably consists of a substantially basin-shaped semi-shell, which is preferably made of an opaque plastic material, preferably via an injection moulding process, and is located inside the rear casing 2 with the concavity turned towards the transparent or semi-transparent portion 3c of front semi-shell 3. Preferably, the bottom of the substantially basin-shaped semi-shell is also mirror metalized so as form the reflecting surface 25r.

More in detail, in the example shown, the reflector body 25 is preferably made in a single piece with the reflector body 14.

In addition, the reflecting surface 25r of reflector body 25 is preferably subdivided into a multitude of small elementary reflective sectors, wherein some of the reflective sectors are opportunely shaped and oriented so as to reflect and direct the light rays r₃ coming from the light source 26 and incident on such sectors directly towards a corresponding predetermined zone/area of the transparent or semi-transparent portion 3c of the front semi-shell 3. Other reflective sectors are instead opportunely shaped and/or oriented so as to reflect the light rays r₃ coming from the light source 26 and incident on such sectors directly towards a dead/opaque zone of the rear casing 2 and/or of the front semi-shell 3.

Similarly to the reflecting surface 14r, therefore the set of reflective sectors of reflecting surface 25r is as a whole structured to reflect and direct the light rays r₃ coming from the light source 26 exclusively towards sector D₃ of the transparent or semi-transparent portion 3c, so as to be able to backlight only sector D₃ of the transparent or semi-transparent portion 3c.

Obviously, in a different embodiment, the reflector body 25 might not have the series of reflective sectors designed to direct the light rays r₃ coming from the light source 26 towards the dead/opaque zone of the rear casing 2 and/or of the front semi-shell 3, and the reflecting surface 25r might have a shape substantially similar that of sector D₃ of the transparent or semi-transparent portion 3c, i.e. of the first luminous pattern to create on the transparent or semi-transparent portion 3c.

With reference to Figures 2 and 6, instead, light source 26 preferably comprises: a support board 27 which is arranged inside the rear casing 2, on a side of the path followed by the light rays r₃ reflected by the reflecting surface 25r and directed towards the transparent or semi-transparent portion 3c of the front semi-shell 3 (i.e. on a side of the empty space delimited at the back by the reflector body 25 and delimited at the front by the transparent or semi-transparent portion 3c of the front semi-shell 3) ; and a series of LED diodes 28 (acronym for Light Emitting Diode) which are arranged spaced out side by side to one another on a same face of the support board 27 in such a way that each LED diode 28 faces the reflecting surface 25r of reflector body 25 and can so direct the generated light directly towards the reflecting surface 25r.

Preferably, the support board 27 also incorporates the power supply and control circuit for the LED diodes 28.

In the example shown, in particular, the support board 27 is preferably located inside the rear casing 2 in a substantially horizontal position and/or locally substantially perpendicular to the front semi-shell 3. Preferably, the support board 27 is also arranged beneath the reflector body 25, locally substantially parallel to the support board of lighting assembly 4 and the support board 17 of lighting assembly 5.

With reference to Figures 2, 3, 4, 5 and 6, additionally lighting assembly 6 also comprises: an intermediate transparent plate 29, which is arranged in an oblique/inclined position between the reflecting surface 25r of reflector body 25 and the transparent or semi-transparent portion 3c of front semi-shell 3, i.e. along the path followed by the light rays r₃ reflected by the reflecting surface 25r and directed towards the transparent or semi-transparent portion 3c, so that the light reflected by the reflector body 25 towards the transparent or semi-transparent portion 3c passes freely through it; and a second electrically-powered light source 30 which is located inside the rear casing 2, on a side of the path followed by the light rays r₃ reflected by the reflecting surface 25r and directed towards the transparent or semi-transparent portion 3c of the front semi-shell 3 (i.e. on a side of the empty space delimited at the back by the reflector body 25 and delimited at the front by the transparent or semi-transparent portion 3c of the front semi-shell 3), and is oriented so as to direct the generated light towards the front face of the intermediate transparent plate 29 in such a way that at least part of this light is reflected by the intermediate transparent plate 29 towards the transparent or semi-transparent portion 3c of the front semi-shell 3.

More in detail, light source 30 is oriented in such a way that at least part of the light rays r₄ coming from the light source 30 can reach the front face of intermediate transparent plate 29 with an angle of incidence greater than the critical angle, and so be reflected towards the transparent or semi-transparent portion 3c of the front semi-shell 3.

Furthermore, light source 30 can also be activated independently of light source 26, and is preferably located inside the rear casing 2 beside light source 26.

In addition, light source 30 is also preferably structured so as to create, on the front face of the intermediate transparent plate 9, its luminous pattern of predetermined shape which the intermediate transparent plate 29 reflects towards the front semi-shell 3, so as form/trace, directly on the transparent or semi-transparent portion 3c of the front semi-shell 3, a second luminous pattern of predetermined shape having a different position and/or shape from that of the first luminous pattern.

Optionally, the second luminous pattern realized on transparent or semi-transparent portion 3c can also be at least partially superimposed on the first luminous pattern.

More in detail, the light source 30 is preferably structured so as to direct, towards the intermediate transparent plate 29, a beam of light rays r₄ that strike/reach a limited zone/area of predetermined shape of the front face of intermediate transparent plate 29; while the intermediate transparent plate 29 is able to reflect the light rays r₄ towards the front semi-shell 3, so as to only and exclusively backlight a second sector D₄ of the transparent or semi-transparent portion 3c not coincident with sector D₃ of the same transparent or semi-transparent portion 3c.

Obviously, the shape of sector D₄ corresponds to the shape of the second luminous pattern made on the transparent or semi-transparent portion 3c. Sector D₄ of transparent or semi-transparent portion 3c also has a different shape from that of sector D₃ of the same transparent or semi-transparent portion 3c.

In other words, the light rays r₃ generated by light source 26 are reflected by reflector body 25 towards the front semi-shell 3 so as to backlight a first sector, namely sector D₃, of transparent or semi-transparent portion 3c; while the light rays r₄ generated by light source 30 are reflected by the intermediate transparent plate 29 towards the front semi-shell 3 so as to backlight a second sector, sector D₄ in this case, of the transparent or semi-transparent portion 3c not coincident with the first sector.

With reference to Figures 2, 3, and 6, in the example shown, in particular, the intermediate transparent plate 29 is preferably made of transparent polycarbonate or another similar plastic material, and is fastened on the reflector body 25 so as to be inclined of an angle preferably ranging between 40° and 50° and, optionally, roughly equal to 45° with respect to the main optical axis A of the lighting unit.

Preferably, the intermediate transparent plate 29 is moreover located inside the rear casing 2 beside the transparent plate 19, in a substantially specular position with respect to the transparent plate 19.

More in detail, in the example shown, the transparent plates 19 and 29 are preferably rigidly fastened in a substantially specular position, on opposite sides of a substantially plate-like central septum 30 that cantilevered projects from the junction between the reflecting surfaces 14r and 25r and extends towards the front semi-shell 3, locally remaining substantially perpendicular to the front semi-shell 3 and preferably also substantially horizontal.

Light source 30, instead, preferably comprises a series of LED diodes 32 (acronym for Light Emitting Diode), which are arranged side by side to one another, preferably on a portion of the support board 27, in such a way that each LED diode 32 faces the front face of the intermediate transparent plate 29 and can direct the generated light towards the front face of intermediate transparent plate 29.

With reference to Figure 6, similar to light source 30, light source 30 preferably also comprises: a plate-like screening mask 33 which is interposed between the LED diodes 32 and the front face of intermediate transparent plate 29, and is provided with a large pass-through opening of predetermined shape, through which part of the light emitted by the LED diodes 32 can reach the front face of the transparent plate 29; and optionally a plate-like screen diffuser (not shown) which is made of transparent or semi-transparent material, is placed to close the pass-through opening of the screening mask 33, and is structured so as to spread the light that passes through the screen diffuser directed towards the pass-through opening of the screening mask 33, preferably in a substantially uniform manner over the entire area/extension of the pass-through opening of the screening mask 33.

Operation of automotive lighting unit 1 is easily inferable from that described above and therefore does not need further explanation.

Instead, with regard to lighting assemblies 5 and 6, transparent plate 19 enables combining the light of light source 15 with the light of light source 20, creating two different luminous patterns on front semi-shell 3 that may or may not be partially superimposed on one another. Similarly, transparent plate 29 enables combining the light of light source 20 with the light of light source 30, creating two further luminous patterns on front semi-shell 3 that are different from each other and which may or may not be partially superimposed.

It is also possible to simulate a moving pattern by choosing the luminous pattern created by the light source 15 (or 26), the luminous pattern created by the light source 20 (or 30) and the sequence of activation of the light sources 15 (or 26) and 20 (or 30) in an appropriate manner.

There are several advantages related to the special structure of lighting assembly 5.

Firstly, the selective combination of the light coming from the two light sources 15 and 25 enables creating particularly innovative light effects.

Moreover lighting assemblies 5 and/or 6 have particularly compact dimensions, thereby enabling production of a small and compact automotive lighting unit 1.

Finally, it is clear that modifications and variants can be made to the above-described automotive lighting unit 1 without departing from the scope of the present invention.

For example, the lighting assembly 5 could comprise a plurality of electrically-powered light sources 20, each of which is oriented so as to direct the generated light towards the front face of the intermediate transparent plate 19 in such a way that at least part of this light is reflected by the intermediate transparent plate 19 towards the transparent or semi-transparent portion 3b of the front semi-shell 3 so as to form/trace a corresponding luminous pattern of predetermined shape directly on the transparent or semi-transparent portion 3b of the front semi-shell 3, different from that of the luminous pattern generated by light source 15.

Furthermore, in another embodiment, instead of the LED diodes 21 or 32, the light source 20 or 30 could comprise an opportunely shaped single plate-like OLED diode (acronym for Organic Light Emitting Diode) to provide the second luminous pattern on the transparent or semi-transparent portion 3b or 3c of the front semi-shell 3.

## Claims

1. An automotive lighting unit (1) comprising a substantially basin-shaped rear casing (2) structured for being fixed onto the vehicle body; a front semi-shell (3), which is arranged to close the mouth (2a) of the rear casing (2) and is provided with at least a first transparent or semi-transparent portion (3b); and at least a first lighting assembly (5), which emits light on command and is arranged within the rear casing (2) so as to backlight said first transparent or semi-transparent portion (3b) of the front semi-shell (3);
the first lighting assembly (5) comprising: a reflector body (14) which is located inside the rear casing (2) spaced apart from and facing said first transparent or semi-transparent portion (3b) and is provided with a reflecting surface (14r) designed to reflect the incident light towards said first transparent or semi-transparent portion (3b); and an electrically-powered, first light source (15) which is located inside the rear casing (2) and is oriented so as to direct the generated light (r₁) towards the reflecting surface (14r) of the reflector body (14) for creating a first luminous pattern (D₁) of predetermined shape on said first transparent or semi-transparent portion (3b); and at least an electrically-powered, second light source (20) which is located inside the rear casing (2); the automotive lighting unit (1) being **characterized in that** said first lighting assembly (5) additionally comprises: an intermediate transparent plate (19) which is arranged in an inclined position between the reflecting surface (14r) of the reflector body (14) and said first transparent or semi-transparent portion (3b) in such a way that the light (r₁) reflected by the reflector body (14) towards said first transparent or semi-transparent portion (3b) passes through it; the second light source (20) is oriented so as to direct the generated light (r₂) towards the front face of the intermediate transparent plate (19) in such a way that at least part of this light (r₂) can reach the front face of the intermediate transparent plate (19) with an angle of incidence greater than the critical angle, in order to be reflected by the intermediate transparent plate (19) towards said first transparent or semi-transparent portion (3b) for creating a second luminous pattern (D₂) of predetermined shape on said first transparent or semi-transparent portion (3b).

2. Automotive lighting unit according to claim 1, **characterized in that** the second luminous pattern (D2) has a different position and/or shape from that of the first luminous pattern (D1).

3. Automotive lighting unit according to claim 1 or 2, **characterized in that** the reflecting surface (14r) of the reflector body (14) is provided with a complex three-dimensional profile which is capable of reflecting the light (r1) coming from the first light source (15) in a predetermined manner towards a specific first sector (D1) of said first transparent or semi-transparent portion (3b) in such a way that the light (r1) generated by the first light source (15), after it has been reflected by the reflector body (14), can only backlight the first sector (D1) of the first transparent or semi-transparent portion (3b) .

4. Automotive lighting unit according to any of the preceding claims, **characterized in that** said first light source (16) is located inside the rear casing (2), on a side of the path followed by the light (r1) reflected by the reflecting surface (14r) of the reflector body (14) and directed towards said first transparent or semi-transparent portion (3b) of the front semi-shell (3).

5. Automotive lighting unit according to claim 4, **characterized in that** the first light source (15) comprises: a support board (17) which is placed inside the rear casing (2), on a side of the path followed by the light (r1) reflected by the reflecting surface (14r) of the reflector body (14) and directed towards said first transparent or semi-transparent portion (3b) of the front semi-shell (3); and a first series of LED diodes (16) which are arranged on said support board (17) in such a way that each LED diode (16) faces the reflecting surface (14r) of the reflector body (14) and can direct the generated light (r1) towards said reflecting surface (14r).

6. Automotive lighting unit according to any of the preceding claims, **characterized in that** said second light source (20) is located inside the rear casing (2), on a side of the path followed by the light (r1) reflected by the reflecting surface (14r) of the reflector body (14) and directed towards said first transparent or semi-transparent portion (3b) of the front semi-shell (3).

7. Automotive lighting unit according to claim 6, **characterized in that** said second light source (20) is located inside the rear casing (2), beside said first light source (15).

8. Automotive lighting unit according to claim 6 or 7, **characterized in that** said second light source (20) comprises a second series of LED diodes (21), which face the front face of said intermediate transparent plate (19) so as to direct the generated light (r2) towards said front face.

9. Automotive lighting unit according to claim 8, **characterized in that** the LED diodes (21) of the second light source (20) are located on a portion of the support board (17) of said first light source (16).

10. Automotive lighting unit according to claim 8 or 9, **characterized in that** said second light source (20) additionally comprises a screening mask (22) which is interposed between said second series of LED diodes (21) and the front face of the intermediate transparent plate (19), and is provided with a pass-through opening (22a) of predetermined shape through which part of the light (r2) emitted by said second series of LED diodes (21) can reach the front face of the transparent plate (19).

11. Automotive lighting unit according to claim 10, **characterized in that** said screening mask (22) is fastened on the support board (17) of the first light source (16) to cover the portion of the board that accommodates said second series of LED diodes (21).

12. Automotive lighting unit according to claim 8, 9, 10 or 11, **characterized in that** said second light source (20) also comprises a screen diffuser (23) which is made of transparent or semi-transparent material, is arranged to close the pass-through opening (22a) of the screening mask (22), and is structured so as to spread the light (r2) that passes through the screen diffuser (23) directed towards the pass-through opening (22a) of the screening mask (22).

13. Automotive lighting unit according to any of the preceding claims, **characterized in that** the front semi-shell (3) is also provided with a second transparent or semi-transparent portion (3c) adjacent to said first transparent or semi-transparent portion (3b); and **in that** it also comprises a second lighting assembly (6) which emits light on command and is placed inside the rear casing (2), beside said first lighting assembly (5), so as to be able to backlight said second transparent or semi-transparent portion (3b) of the front semi-shell (3).

14. Automotive lighting unit according to claim 13, **characterized in that** said second lighting assembly (6) comprises: a reflector body (25) which is located inside the rear casing (2) spaced apart from and facing said second transparent or semi-transparent portion (3c), and is provided with a reflecting surface (25r) designed to reflect the incident light towards said second transparent or semi-transparent portion (3c); an electrically-powered, first light source (26) which is located inside the rear casing (2) and is oriented so as to direct the generated light (r₃) towards the reflecting surface (25r) of the reflector body (25) for creating a first luminous pattern (D₃) of predetermined shape on said second transparent or semi-transparent portion (3c); an intermediate transparent plate (29) which is arranged in an inclined position between the reflecting surface (25r) of the reflector body (25) and said second transparent or semi-transparent portion (3c) so that the light (r₃) reflected by the reflector body (25) towards said second transparent or semi-transparent portion (3c) passes through it; and at least an electrically-powered, second light source (30) which is located inside the rear casing (2) and is oriented so as to direct the generated light (r₄) towards the intermediate transparent plate (29), in such a way that at least part of this light (r₄) is reflected by the intermediate transparent plate (29) towards said second transparent or semi-transparent portion (3c) for creating a second luminous pattern (D₄) of predetermined shape on said second transparent or semi-transparent portion (3c).

15. Automotive lighting unit according to claim 14, **characterized in that** the reflector body (25) of the second lighting assembly (6) is made in one piece with the reflector body (14) of the first lighting assembly (5); and **in that** the intermediate transparent plate (29) of the second lighting assembly (6) is located in a substantially specular position, beside the intermediate transparent plate (19) of the first lighting assembly (5).

## Patentansprüche

1. Eine Kfz-Beleuchtungseinheit (1), bestehend aus einem weitgehend schalenförmigen Gehäuserückteil (2) zur Befestigung an der Karosserie; aus einer vorderen Halbschale (3), mit der die Öffnung (2a) des Gehäuserückteils (2) verschlossen und die mit mindestens einem ersten transparenten oder semi-transparenten Abschnitt (3b) versehen ist; und aus mindestens einer ersten Beleuchtungsgruppe (5), die auf Befehl Licht emittiert und im Gehäuserückteil (2) so angeordnet ist, dass sie den genannten ersten transparenten oder semi-transparenten Abschnitt (3b) der vorderen Halbschale (3) von hinten beleuchtet;
die erste Beleuchtungsgruppe (5) umfassend: einen Reflektorkorpus (14), der im Inneren des Gehäuserückteils (2) getrennt von und dem genannten ersten transparenten oder semi-transparenten Abschnitt (3b) zugewandt angeordnet ist, und der mit einer reflektierenden Oberfläche (14r) versehen ist, die für die Reflexion des auftreffenden Lichts in Richtung auf den genannten ersten transparenten oder semi-transparenten Abschnitts (3b) ausgebildet ist; und eine elektrisch betriebene erste Lichtquelle (15), die im Inneren des Gehäuserückteils (2) angeordnet ist und die so orientiert ist, dass das erzeugte Licht (r₁) in Richtung auf die reflektierende Oberfläche (14r) des Reflektorkorpus (14) abstrahlt, um auf dem genannten ersten transparenten oder semi-transparenten Abschnitt (3b) ein erstes Lichtmuster (D₁) in einer vorgegebenen Form zu erzeugen; und mindestens eine elektrisch betriebene zweite Lichtquelle (20), die im Inneren des Gehäuserückteils (2) angeordnet ist;
wobei die Kfz-Beleuchtungseinheit (1) **dadurch gekennzeichnet ist, dass** die genannte erste Beleuchtungsgruppe (5) zusätzlich umfasst: eine transparente Zwischenscheibe (19), die in einer geneigten Position zwischen der reflektierenden Oberfläche (14r) des Reflektorkorpus (14) und dem genannten ersten transparenten oder semi-transparenten Abschnitt (3b) so angeordnet ist, dass das vom Reflektorkorpus (14) reflektierte Licht (r₁) durch diese in Richtung des genannten ersten transparenten oder semi-transparenten Abschnitts (3b) gelenkt wird; die zweite Lichtquelle (20) ist so ausgerichtet, dass das erzeugte Licht (r₂) so in Richtung der Vorderseite der transparenten Zwischenscheibe (19) gelenkt wird, dass zumindest ein Teil dieses Lichts (r₂) auf die Vorderseite der transparenten Zwischenscheibe (19) mit einem Einfallswinkel trifft, der größer als der kritische Winkel ist, um von der transparenten Zwischenscheibe (19) in Richtung auf den genannten ersten transparenten oder semi-transparenten Abschnitt (3b) reflektiert zu werden und auf dem genannten ersten transparenten oder semi-transparenten Abschnitt (3b) ein zweites Lichtmuster (D₂) in einer vorgegebenen Form zu erzeugen.

2. Kfz-Beleuchtungseinheit nach Anspruch 1, **dadurch gekennzeichnet, dass** das zweite Lichtmuster (D₂) eine von dem ersten Lichtmuster (D₁) abweichende Position und/oder Form hat.

3. Kfz-Beleuchtungseinheit nach Anspruch 1 oder 2, **dadurch gekennzeichnet, dass** die reflektierende Oberfläche (14r) des Reflektorkorpus (14) mit einem komplexen dreidimensionalen Profil versehen ist, welches geeignet ist, das von der ersten Lichtquelle (15) kommende Licht (r₁) in einer vorgegebenen Weise in Richtung auf einen spezifischen ersten Sektor (D₁) des genannten ersten transparenten oder semi-transparenten Abschnitts (3b) zu reflektieren, in einer Weise, dass das von der ersten Lichtquelle (15) erzeugte Licht (r₁), nachdem es von dem Reflektorkorpus (14) reflektiert wurde, nur den ersten Sektor (D₁) des ersten transparenten oder semi-transparenten Abschnitts (3b) von hinten beleuchten kann.

4. Kfz-Beleuchtungseinheit nach einem der vorstehenden Ansprüche, **dadurch gekennzeichnet, dass** die genannte erste Lichtquelle (16) im Inneren des Gehäuserückteils (2) angeordnet ist, auf einer Seite des Pfads des von der reflektierenden Oberfläche (14r) des Reflektorkorpus (14) reflektierten und in Richtung auf den genannten ersten transparenten oder semi-transparenten Abschnitt (3b) der vorderen Halbschale (3) gelenkten Lichtstrahls (r1).

5. Kfz-Beleuchtungseinheit nach Anspruch 4, **dadurch gekennzeichnet, dass** die erste Lichtquelle (15) umfasst:
eine Trägerplatte (17), die im Inneren des Gehäuserückteils (2) angeordnet ist, auf einer Seite des Pfads des von der reflektierenden Oberfläche (14r) des Reflektorkorpus (14) reflektierten und in Richtung des genannten ersten transparenten oder semi-transparenten Abschnitts (3b) der vorderen Halbschale (3) gelenkten Lichtstrahls (r1); und eine erste Reihe mit LEDs (16), die auf der genannten Trägerplatte (17) so angeordnet sind, dass jede LED (16) der reflektierenden Oberfläche (14r) des Reflektorkorpus (14) zugewandt ist und das erzeugte Licht (r1) in Richtung auf die genannte reflektierende Oberfläche (14r) lenken kann.

6. Kfz-Beleuchtungseinheit nach einem der vorstehenden Ansprüche, **dadurch gekennzeichnet, dass** die genannte zweite Lichtquelle (20) im Inneren des Gehäuserückteils (2) angeordnet ist, auf einer Seite des Pfads des von der reflektierenden Oberfläche (14r) des Reflektorkorpus (14) reflektierten und in Richtung des genannten ersten transparenten oder semi-transparenten Abschnitts (3b) der vorderen Halbschale (3) gelenkten Lichtstrahls (r1).

7. Kfz-Beleuchtungseinheit nach Anspruch 6, **dadurch gekennzeichnet, dass** die genannte zweite Lichtquelle (20) im Inneren des Gehäuserückteils (2) neben der genannten ersten Lichtquelle (15) angeordnet ist.

8. Kfz-Beleuchtungseinheit nach Anspruch 6 oder 7, **dadurch gekennzeichnet, dass** die genannte zweite Lichtquelle (20) eine zweite Reihe von LEDs (21) umfasst, die der Vorderseite der genannten transparenten Zwischenscheibe (19) zugewandt sind, um das erzeugte Licht (r2) in Richtung auf die genannte Vorderseite zu lenken.

9. Kfz-Beleuchtungseinheit gemäß Anspruch 8, **dadurch gekennzeichnet, dass** die LEDs (21) der zweiten Lichtquelle (20) auf einem Abschnitt der Trägerplatte (17) der genannten ersten Lichtquelle (16) angeordnet sind.

10. Kfz-Beleuchtungseinheit nach Anspruch 8 oder 9, **dadurch gekennzeichnet, dass** die genannte zweite Lichtquelle (20) zusätzlich eine Abschirmung (22) umfasst, die zwischen der genannten zweiten LED-Reihe (21) und der Vorderseite der transparenten Zwischenscheibe (19) angeordnet ist, und die mit einer Durchgangsöffnung (22a) in einer vorgegebenen Form versehen ist, durch welche hindurch ein Teil des von der genannten zweite LED-Reihe (21) emittierten Lichts (r2) die Vorderseite der transparenten Scheibe (19) erreichen kann.

11. Kfz-Beleuchtungseinheit nach Anspruch 10, **dadurch gekennzeichnet, dass** die genannte Abschirmung (22) auf der Trägerplatte (17) der ersten Lichtquelle (16) befestigt ist, um den Abschnitt der Platte abzuschirmen, auf dem die genannte zweite LED-Reihe (21) montiert ist.

12. Kfz-Beleuchtungseinheit nach Anspruch 8, 9, 10 oder 11, **dadurch gekennzeichnet, dass** die genannte zweite Lichtquelle (20) außerdem eine Streuscheibe (23) umfasst, die aus einem transparenten oder semi-transparenten Material hergestellt ist, mit welcher die Durchgangsöffnung (22a) der Abschirmung (22) verschlossen wird und die so strukturiert ist, dass das Licht (r2), das die Streuscheibe (23) in Richtung der Durchgangsöffnung (22a) der Abschirmung (22) passiert, gestreut wird.

13. Kfz-Beleuchtungseinheit nach einem der vorstehenden Ansprüche, **dadurch gekennzeichnet, dass** die vordere Halbschale (3) zusätzlich mit einem zweiten transparenten oder semi-transparenten Abschnitt (3c) versehen ist, der zu dem genannten ersten transparenten oder semi-transparenten Abschnitt (3b) benachbart ist; und dass sie zusätzlich eine zweite Beleuchtungsgruppe (6) umfasst, die auf Befehl Licht emittiert und im Inneren des Gehäuserückteils (2) neben der genannten ersten Beleuchtungsgruppe (5) so angeordnet ist, dass sie geeignet ist, den genannten zweiten transparenten oder semi-transparenten Abschnitt (3b) der vorderen Halbschale (3) von hinten zu beleuchten.

14. Kfz-Beleuchtungseinheit nach Anspruch 13, **dadurch gekennzeichnet, dass** die genannte zweite Beleuchtungsgruppe (6) umfasst: einen Reflektorkorpus (25), der im Inneren des Gehäuserückteils (2) angeordnet ist, getrennt von und dem genannten zweiten transparenten oder semi-transparenten Abschnitt (3c) zugewandt, und der mit einer reflektierenden Oberfläche (25r) für die Reflexion des auftreffenden Lichts in Richtung auf den genannten zweiten transparenten oder semi-transparenten Abschnitt (3c) versehen ist; eine elektrisch betriebene erste Lichtquelle (26), die im Inneren des Gehäuserückteils (2) angeordnet ist und die so orientiert ist, dass das erzeugte Licht (r₃) in Richtung auf die reflektierende Oberfläche (25r) des Reflektorkorpus (25) reflektiert, um auf dem genannten zweiten transparenten oder semi-transparenten Abschnitt (3c) ein erstes Lichtmuster (D₃) mit einer vorgegebenen Form zu erzeugen; eine transparente Zwischenscheibe (29), die in einer geneigten Position zwischen der reflektierenden Oberfläche (25r) des Reflektorkorpus (25) und dem genannten zweiten transparenten oder semi-transparenten Abschnitt (3c) so angeordnet ist, dass das vom Reflektorkorpus (25) reflektierte Licht (r3) durch diese hindurch in Richtung auf den genannten zweiten transparenten oder semi-transparenten Abschnitt (3c) gelenkt wird; und mindestens eine elektrisch betriebene zweite Lichtquelle (30), die im Inneren des Gehäuserückteils (2) angeordnet ist und die so orientiert ist, dass das erzeugte Licht (r₄) so in Richtung auf die transparente Zwischenscheibe (29) abstrahlt, dass zumindest ein Teil dieses Lichts (r₄) von der transparenten Zwischenscheibe (29) in Richtung auf den genannten zweiten transparenten oder semi-transparenten Abschnitt (3c) reflektiert wird, um auf dem genannten zweiten transparenten oder semi-transparenten Abschnitt (3c) ein zweites Lichtmuster (D₄) in einer vorgegebenen Form zu erzeugen.

15. Kfz-Beleuchtungseinheit nach Anspruch 14, **dadurch gekennzeichnet, dass** der Reflektorkorpus (25) der zweiten Beleuchtungsgruppe (6) mit dem Reflektorkorpus (14) der ersten Beleuchtungsgruppe (5) einstückig hergestellt ist; und dass die transparente Zwischenscheibe (29) der zweiten Beleuchtungsgruppe (6) in einer im Wesentlichen spiegelnden Position neben der transparenten Zwischenscheibe (19) der ersten Beleuchtungsgruppe (5) angeordnet ist.

## Revendications

1. Unité d'éclairage automobile (1) comprenant un boîtier arrière (2) sensiblement en forme de cuvette structuré pour être fixé sur la carrosserie d'un véhicule ; une demi-coque avant (3), qui est agencée pour fermer la bouche (2a) du boîtier arrière (2) et qui est pourvue d'au moins une première portion transparente ou semi-transparente (3b) ; et au moins un premier ensemble d'éclairage (5), qui émet une lumière sur commande et qui est agencé à l'intérieur du boîtier arrière (2) de sorte à rétroéclairer ladite première portion transparente ou semi-transparente (3b) de la demi-coque avant (3) ;
le premier ensemble d'éclairage (5) comprenant : un corps de réflecteur (14) qui est situé à l'intérieur du boîtier arrière (2) espacé de ladite première portion transparente ou semi-transparente (3b) et tourné vers celle-ci, et qui est pourvu d'une surface réfléchissante (14r) conçue pour réfléchir la lumière incidente vers ladite première portion transparente ou semi-transparente (3b) ; et une première source de lumière (15) alimentée électriquement, qui est située à l'intérieur du boîtier arrière (2) et qui est orientée de sorte à diriger la lumière (r₁) générée vers la surface réfléchissante (14r) du corps de réflecteur (14) pour créer un premier motif lumineux (D₁) de forme prédéterminée sur ladite première portion transparente ou semi-transparente (3b) ; et au moins une deuxième source de lumière (20) alimentée électriquement, qui est située à l'intérieur du boîtier arrière (2) ;
l'unité d'éclairage automobile (1) étant **caractérisée en ce que** ledit premier ensemble d'éclairage (5) comprend en outre : une plaque transparente (19) intermédiaire qui est agencée dans une position inclinée entre la surface réfléchissante (14r) du corps de réflecteur (14) et ladite première portion transparente ou semi-transparente (3b), de telle manière que la lumière (r₁) réfléchie par le corps de réflecteur (14) vers ladite première portion transparente ou semi-transparente (3b) passe à travers elle ; la deuxième source de lumière (20) est orientée de sorte à diriger la lumière (r₂) générée vers la face avant de la plaque transparente (19) intermédiaire, de telle manière qu'au moins une partie de cette lumière (r₂) puisse atteindre la face avant de la plaque transparente (19) intermédiaire avec un angle d'incidence supérieur à l'angle critique, afin d'être réfléchie par la plaque transparente (19) intermédiaire vers ladite première portion transparente ou semi-transparente (3b) pour créer un deuxième motif lumineux (D₂) de forme prédéterminée sur ladite première portion transparente ou semi-transparente (3b).

2. Unité d'éclairage automobile selon la revendication 1,
**caractérisée en ce que** le deuxième motif lumineux (D₂) a une position et/ou une forme différentes de celles du premier motif lumineux (D₁).

3. Unité d'éclairage automobile selon la revendication 1 ou 2, **caractérisée en ce que** la surface réfléchissante (14r) du corps de réflecteur (14) est pourvue d'un profil tridimensionnel complexe qui est capable de réfléchir la lumière (r₁) provenant de la première source de lumière (15) d'une manière prédéterminée vers un premier secteur (D₁) spécifique de ladite première portion transparente ou semi-transparente (3b), de telle manière que la lumière (r₁) générée par la première source de lumière (15), après avoir été réfléchie par le corps de réflecteur (14), ne puisse rétroéclairer que le premier secteur (D₁) de la première portion transparente ou semi-transparente (3b).

4. Unité d'éclairage automobile selon l'une quelconque des revendications précédentes, **caractérisée en ce que** ladite première source de lumière (16) est située à l'intérieur du boîtier arrière (2), sur un côté du trajet suivi par la lumière (r₁) réfléchie par la surface réfléchissante (14r) du corps de réflecteur (14) et dirigée vers ladite première portion transparente ou semi-transparente (3b) de la demi-coque avant (3).

5. Unité d'éclairage automobile selon la revendication 4, **caractérisée en ce que** la première source de lumière (15) comprend : un panneau de support (17) qui est placé à l'intérieur du boîtier arrière (2), sur un côté du trajet suivi par la lumière (r₁) réfléchie par la surface réfléchissante (14r) du corps de réflecteur (14) et dirigée vers ladite première portion transparente ou semi-transparente (3b) de la demi-coque avant (3) ; et une première série de diodes DEL (16) qui sont agencées sur ledit panneau de support (17), de telle manière que chaque diode DEL (16) soit tournée vers la surface réfléchissante (14r) du corps de réflecteur (14) et puisse diriger la lumière (r₁) générée vers ladite surface réfléchissante (14r).

6. Unité d'éclairage automobile selon l'une quelconque des revendications précédentes, **caractérisée en ce que** ladite deuxième source de lumière (20) est située à l'intérieur du boîtier arrière (2), sur un côté du trajet suivi par la lumière (r₁) réfléchie par la surface réfléchissante (14r) du corps de réflecteur (14) et dirigée vers ladite première portion transparente ou semi-transparente (3b) de la demi-coque avant (3).

7. Unité d'éclairage automobile selon la revendication 6, **caractérisée en ce que** ladite deuxième source de lumière (20) est située à l'intérieur du boîtier arrière (2), à côté de ladite première source de lumière (15).

8. Unité d'éclairage automobile selon la revendication 6 ou 7, **caractérisée en ce que** ladite deuxième source de lumière (20) comprend une deuxième série de diodes DEL (21), qui sont tournées vers la face avant de ladite plaque transparente (19) intermédiaire de sorte à diriger la lumière (r₂) générée vers ladite face avant.

9. Unité d'éclairage automobile selon la revendication 8, **caractérisée en ce que** les diodes DEL (21) de la deuxième source de lumière (20) sont situées sur une portion du panneau de support (17) de ladite première source de lumière (16).

10. Unité d'éclairage automobile selon la revendication 8 ou 9, **caractérisée en ce que** ladite deuxième source de lumière (20) comprend en plus un masque de protection (22) qui est interposé entre ladite deuxième série de diodes DEL (21) et la face avant de la plaque transparente (19) intermédiaire, et qui est pourvu d'une ouverture de passage (22a) de forme prédéterminée à travers laquelle une partie de la lumière (r₂), émise par ladite deuxième série de diodes DEL (21), peut atteindre la face avant de la plaque transparente (19).

11. Unité d'éclairage automobile selon la revendication 10, **caractérisée en ce que** ledit masque de protection (22) est monté sur le panneau de support (17) de la première source de lumière (16) pour couvrir la portion du panneau qui reçoit ladite deuxième série de diodes DEL (21).

12. Unité d'éclairage automobile selon la revendication 8, 9, 10 ou 11, **caractérisée en ce que** ladite deuxième source de lumière (20) comprend également un diffuseur protecteur (23) qui est réalisé en matériau transparent ou semi-transparent, qui est agencé pour fermer l'ouverture de passage (22a) du masque de protection (22), et qui est structuré de sorte à diffuser la lumière (r₂) qui passe à travers le diffuseur protecteur (23) dirigé vers l'ouverture de passage (22a) du masque de protection (22).

13. Unité d'éclairage automobile selon l'une quelconque des revendications précédentes, **caractérisée en ce que** la demi-coque avant (3) est également pourvue d'une deuxième portion transparente ou semi-transparente (3c) adjacente à ladite première portion transparente ou semi-transparente (3b) ; et **en ce qu'**elle comprend également un deuxième ensemble d'éclairage (6) qui émet une lumière sur commande et qui est placé à l'intérieur du boîtier arrière (2), à côté dudit premier ensemble d'éclairage (5), de sorte à pouvoir rétroéclairer ladite deuxième portion transparente ou semi-transparente (3b) de la demi-coque avant (3).

14. Unité d'éclairage automobile selon la revendication 13, **caractérisée en ce que** ledit deuxième ensemble d'éclairage (6) comprend : un corps de réflecteur (25) qui est situé à l'intérieur du boîtier arrière (2) espacé de ladite deuxième portion transparente ou semi-transparente (3c) et tourné vers celle-ci, et qui est pourvu d'une surface réfléchissante (25r) conçue pour réfléchir la lumière incidente vers ladite deuxième portion transparente ou semi-transparente (3c) ; une première source de lumière (26) alimentée électriquement, qui est située à l'intérieur du boîtier arrière (2) et qui est orientée de sorte à diriger la lumière (r₃) générée vers la surface réfléchissante (25r) du corps de réflecteur (25) pour créer un premier motif lumineux (D₃) de forme prédéterminée sur ladite deuxième portion transparente ou semi-transparente (3c) ; une plaque transparente (29) intermédiaire qui est agencée dans une position inclinée entre la surface réfléchissante (25r) du corps de réflecteur (25) et ladite deuxième portion transparente ou semi-transparente (3c), de sorte que la lumière (r₃) réfléchie par le corps de réflecteur (25) vers ladite deuxième portion transparente ou semi-transparente (3c) passe à travers elle ; et au moins une deuxième source de lumière (30) alimentée électriquement, qui est située à l'intérieur du boîtier arrière (2) et qui est orientée de sorte à diriger la lumière (r₄) générée vers la plaque transparente intermédiaire (29), de telle manière qu'au moins une partie de cette lumière (r₄) soit réfléchie par la plaque transparente (29) intermédiaire vers ladite deuxième portion transparente ou semi-transparente (3c) pour créer un deuxième motif lumineux (D₄) de forme prédéterminée sur ladite deuxième portion transparente ou semi-transparente (3c).

15. Unité d'éclairage automobile selon la revendication 14, **caractérisée en ce que** le corps de réflecteur (25) du deuxième ensemble d'éclairage (6) est réalisé en un seul tenant avec le corps de réflecteur (14) du premier ensemble d'éclairage (5) ; et **en ce que** la plaque transparente (29) intermédiaire du deuxième ensemble d'éclairage (6) est située dans une position sensiblement spéculaire, à côté de la plaque transparente (19) intermédiaire du premier ensemble d'éclairage (5).
